# EUROPEAN PATENT APPLICATION

(11) **EP 4 408 000 A1**
(43) Date of publication of application: **31.07.2024**
(21) Application number: 22872708.7
(22) Date of filing: 07.09.2022
(51) Int. Cl.: H04N 21/258, G06F 16/48, H04N 21/235, H04N 21/431, H04N 21/45, H04N 21/482

(54) **INFORMATION PROCESSING DEVICE, INFORMATION PROCESSING METHOD, PROGRAM, AND INFORMATION PROCESSING SYSTEM**

(30) Priority: 22.09.2021 JP 2021154872
(71) Applicant: Panasonic Intellectual Property Management Co., Ltd., Osaka-shi, Osaka 540-6207 (JP)
(72) Inventor: YAMAGUCHI, Masaki, Kadoma-shi, Osaka 571-0057 (JP); UEDA, Isao, Kadoma-shi, Osaka 571-0057 (JP); UESAKA, Yasushi, Kadoma-shi, Osaka 571-0057 (JP); OKAZAKI, Seigo, Kadoma-shi, Osaka 571-0057 (JP)
(74) Representative: Grünecker Patent- und Rechtsanwälte PartG mbB
(86) International application number: PCT/JP2022/033506
(87) International publication number: WO 2023/047952

(57) **Abstract**

An information processing device (100) includes: an obtainer (11) that obtains a viewing history; a first evaluator (evaluator (13)) that assigns a first score related to a preference tag assigned to each item of broadcast content; a second evaluator (evaluator (13)) that assigns a second score related to a combined preference tag or a single preference tag; a first preference information table that stores the first score calculated for each item of broadcast content included in the viewing history; a second preference information table that stores the second score calculated for each item of broadcast content included in the viewing history; and an outputter (17) that outputs preference information that matches a preference of a user in a predetermined period and includes one or more preference tags among (i) a plurality of kinds of preference tags, (ii) a plurality of patterns of combined preference tags, and (iii) a plurality of patterns of single preference tags.

## Description

### [Technical Field]

The present disclosure relates to an information processing device, an information processing method, a program, and an information processing system for estimating user preferences from the viewing history of broadcast content viewed by the user.

### [Background Art]

Patent Literature (PTL) 1 discloses an information processing device. The information processing device includes an obtainer, an analyzer, an evaluator, a visualizer, and a display. The obtainer obtains program information of a program (audience rating, program description, keywords, broadcast start time and end time, information about performers, impressions of the program, the number of the impressions, the number of reuse of program introduction information, the number of comments that are sent to the official site of program P1, and usage history). The analyzer quantifies program information. The evaluator evaluates the program based on the numerical value obtained by the analyzer. The visualizer collectively converts the results of the evaluation performed by the evaluator into graphical representation. The display presents the evaluation results that are graphically represented by the visualizer.

### [Citation List]

### [Patent Literature]

[PTL 1] Japanese Unexamined Patent Application Publication No. 2006-60600

### [Summary of Invention]

### [Technical Problem]

The present disclosure provides an information processing system and the like which is capable of easily increasing the accuracy of estimating user preferences.

### [Solution to Problem]

An information processing device according to one aspect of the present disclosure includes: an obtainer that obtains a viewing history of one or more items of broadcast content viewed by a user in a past predetermined period; a first evaluator that assigns a first score related to a preference tag assigned to each of a plurality of items of broadcast content among a plurality of preference tags of different kinds corresponding to a plurality of preferences of different kinds of a viewer; a second evaluator that assigns a second score related to a combined preference tag or a single preference tag corresponding to each of the plurality of items of broadcast content among a plurality of combined preference tags of different patterns and a plurality of single preference tags of different patterns, each of the plurality of combined preference tags being a combination of two or more of the plurality of preference tags, each of the plurality of single preference tags being one of the plurality of preference tags solely assigned to the broadcast content; a first preference information table that stores the first score calculated for each of the one or more items of broadcast content included in the viewing history obtained; a second preference information table that stores the second score calculated for each of the one or more items of broadcast content included in the viewing history obtained; and an outputter that refers to the first preference information table and the second preference information table to output preference information that matches a preference of the user in the past predetermined period, the preference information including one or more preference tags among (i) the plurality of preference tags, (ii) the plurality of combined preference tags, and (iii) the plurality of single preference tags.

An information processing method according to one aspect of the present disclosure includes: obtaining a viewing history of one or more items of broadcast content viewed by a user in a past predetermined period; assigning a first score related to a preference tag assigned to each of a plurality of items of broadcast content among a plurality of preference tags of different kinds corresponding to a plurality of preferences of different kinds of a viewer; assigning a second score related to a combined preference tag or a single preference tag corresponding to each of the plurality of items of broadcast content among a plurality of combined preference tags of different patterns and a plurality of single preference tags of different patterns, each of the plurality of combined preference tags being a combination of two or more of the plurality of preference tags, each of the plurality of single preference tags being one of the plurality of preference tags solely assigned to the broadcast content; storing the first score calculated for each of the one or more items of broadcast content included in the viewing history obtained; storing the second score calculated for each of the one or more items of broadcast content included in the viewing history obtained; and referring to the first score stored in the storing of the first score and the second score stored in the storing of the second score to output preference information that matches a preference of the user in the past predetermined period, the preference information including one or more preference tags among (i) the plurality of preference tags, (ii) the plurality of combined preference tags, and (iii) the plurality of single preference tags.

A program according to one aspect of the present disclosure causes one or more processors to execute the information processing method.

An information processing system according to one aspect of the present disclosure includes: the information processing device; a matching device that selects one or more items of broadcast content to be presented to the user, based on the preference information outputted; an evaluation level calculator that calculates an evaluation level that is based on each of the one or more items of broadcast content selected and the preference information; and a graphic generator that generates an image including, along with the one or more items of broadcast content selected, information about details of each of the one or more items of broadcast content, the evaluation level calculated for the broadcast content, and tag information that matches the preference information of the user, the tag information including one or more tags among (i) the plurality of preference tags, (ii) the plurality of combined preference tags, and (iii) the plurality of single preference tags.

### [Advantageous Effects of Invention]

The information processing system and the like according to the present disclosure is capable of easily increasing the accuracy of estimating user preferences.

### [Brief Description of Drawings]

[FIG. 1]

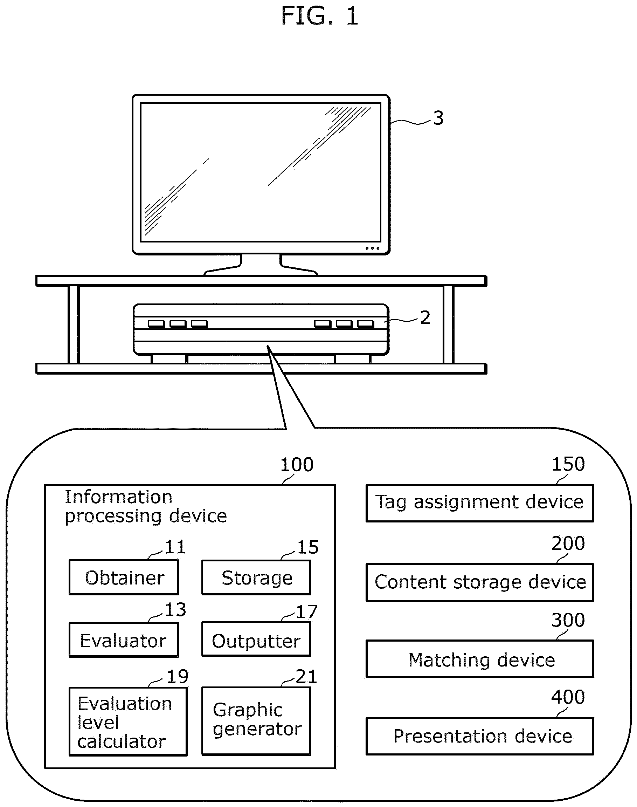

   FIG. 1 is a schematic diagram illustrating a configuration of an information processing device and the like according to an embodiment.
[FIG. 2]

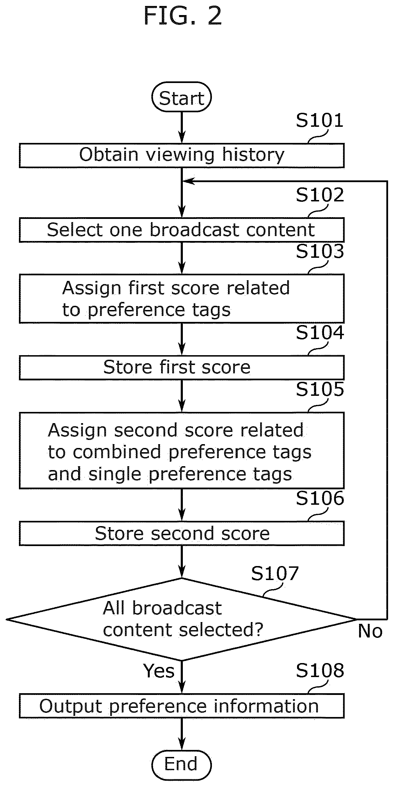

   FIG. 2 is a flowchart illustrating an example of processes performed by the information processing device according to the embodiment.
[FIG. 3A]

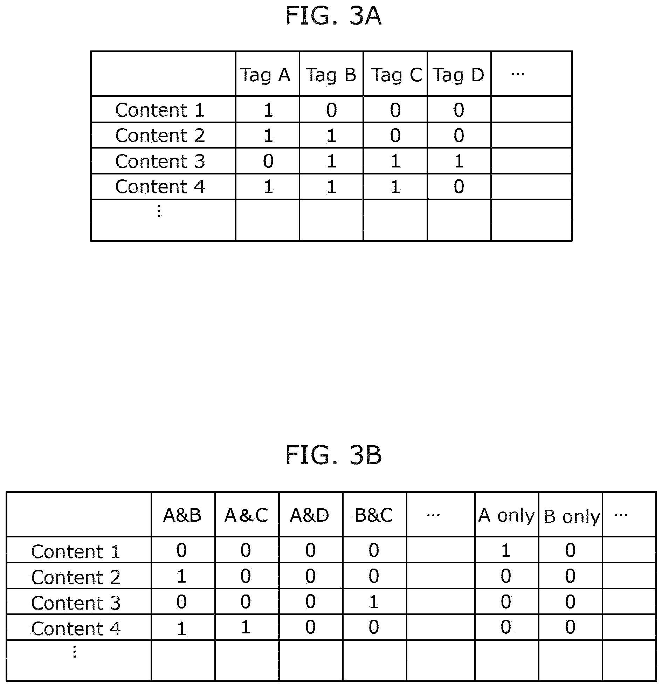

   FIG. 3A illustrates an example of first scores stored according to the embodiment.
[FIG. 3B]
   FIG. 3B illustrates an example of second scores stored according to the embodiment.
[FIG. 4A]

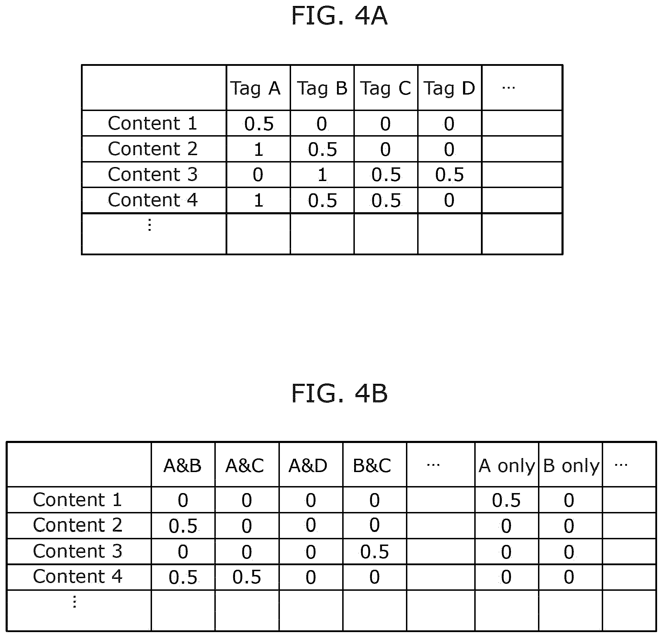

   FIG. 4A illustrates another example of the first scores stored according to the embodiment.
[FIG. 4B]
   FIG. 4B illustrates another example of the second scores stored according to the embodiment.
[FIG. 5]

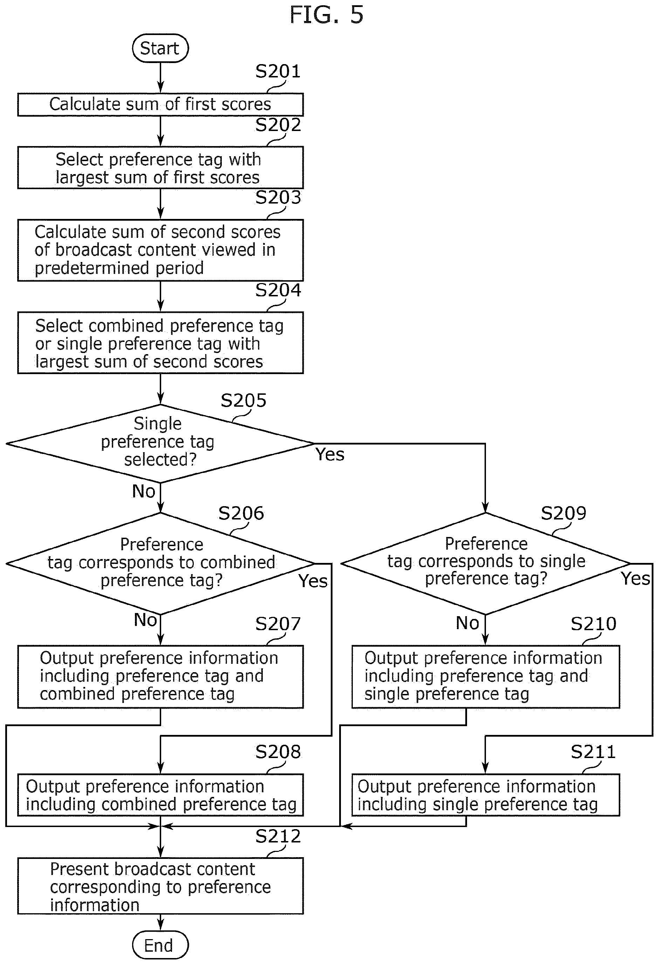

   FIG. 5 is a flowchart illustrating an example of processes for outputting preference information and presenting broadcast content according to the embodiment.
[FIG. 6]

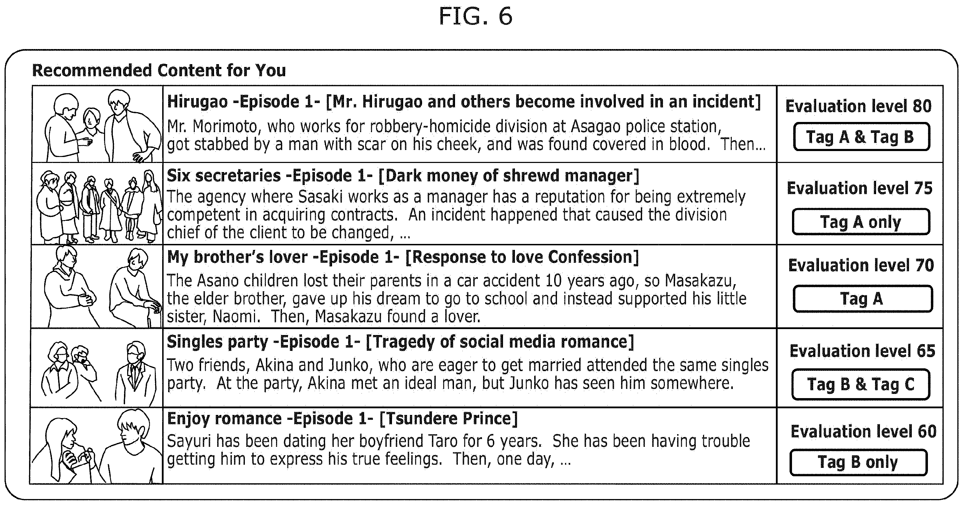

   FIG. 6 illustrates an example of a screen graphically representing broadcast content information, evaluation levels, and preference information according to the embodiment.

### [Description of Embodiment]

### (Underlying Knowledge Forming Basis of the Present Disclosure)

First, the inventors' point of view will be described below.

With the spread of terrestrial digital broadcasting and the increasing sophistication of recording devices, users can not only view broadcast content (television programs) in real time, but also view broadcast content at the time of their choosing. In addition to viewing broadcast content on stationary television receivers, the users can now also view broadcast content on portable terminals owned by the users, such as smartphones or tablet terminals. This has further diversified the opportunities for the users to view broadcast content. With such diversification of opportunities to view broadcast content, the number of items of broadcast content available to the users can be enormous. This makes it difficult for the users to select and view broadcast content that matches their preferences from among a large number of items of broadcast content.

In view of the above, there have been attempts to estimate user preferences based on the viewing history of broadcast content viewed by users, and to recommend broadcast content that matches the estimated preferences to the users. However, there is a problem that it is difficult to estimate user preferences with sufficient accuracy by simply using the viewing history. For example, it is assumed that a user watches a particular program more frequently. In this case, when simply the viewing history is used, the genre of the particular program is expected to be estimated as user preferences. In reality, however, it is possible that the user prefers only some parts of the content included in the particular program, rather than the genre of the particular program.

In view of above, the inventors have arrived at the present disclosure.

Hereinafter, an embodiment will be described in detail with reference to the drawings as appropriate. However, more detailed explanation than necessary may be omitted. For example, detailed explanations of already well-known matters and duplicate explanations for substantially the same configuration may be omitted. This is to avoid unnecessary redundancy of the following description and to facilitate the understanding of those skilled in the art.

It should be noted that the inventors provide the accompanying drawings and the following description in order for those skilled in the art to fully understand the present disclosure, and are not intended to limit the subject matter described in the claims by these.

### [Embodiment]

### [1. Configuration]

Hereinafter, information processing device 100 and an information processing system using information processing device 100 according to an embodiment will be described with reference to FIG. 1. FIG. 1 is a schematic diagram illustrating a configuration of an information processing device and the like according to the embodiment. Information processing device 100 is a device for estimating user preferences based on the viewing history of broadcast content viewed by the user. In the information processing system, tag assignment device 150, content storage device 200, matching device 300, and presentation device 400 are combined with information processing device 100, so that broadcast content that matches the user preferences estimated by information processing device 100 can be presented from among a plurality of items of broadcast content.

In the present embodiment, information processing device 100 is mounted in recording device 2 that records television programs as broadcast content. Recording device 2 is connected to television receiver 3, and is capable of recording television programs received by television receiver 3 in response to a timer setting operation or the like made by a user. Information processing device 100 may be mounted in a television receiver with a recording function for recording television programs. Information processing device 100 may also be mounted in, for example, a server.

In the present embodiment, the broadcast content is terrestrial broadcast television programs. However, the present embodiment is not limited to such an example, but may include broadcasting satellites (BS) television programs, or communication satellites (CS) television programs, etc. The broadcasting content handled by information processing device 100 is not limited to television broadcasting content, but may include, for example, Internet broadcasting content provided by video sharing services.

As illustrated in FIG. 1, information processing device 100 includes obtainer 11, evaluator 13, storage 15, outputter 17, evaluation level calculator 19, and graphic generator 21.

Obtainer 11 obtains a viewing history of broadcast content viewed by the user in a past predetermined period. The term "broadcast content viewed by the user" here includes broadcast content viewed by the user in real time on television receiver 3 without being recorded on recording device 2 and/or broadcast content for which timer recording was set to recording device 2 (i.e., broadcast content for which timer recording was set in the past and which broadcast in the past or which is to be broadcast in the future).

The term "predetermined period" here refers to the period of time required for sufficient amount of broadcast content to be accumulated to estimate user preferences. Accordingly, the predetermined period may be a variable period determined by the number of items of broadcast content, or may be a fixed period, such as one day, one week, or one month, in which a statistically sufficient amount of broadcast content is considered to be accumulated.

The term "viewing history" here includes the number of times the user has viewed the broadcast content and/or the date and time of the user's viewing of the broadcast content. The "viewing history" here also includes, for example, electronic program guide (EPG) information and/or service information (SI) each of which is program information, when the broadcast content is a television program. In other words, the "viewing history" includes the details of the broadcast content, the number of times the broadcast content was viewed, and/or the date and time of the viewing. The "details of the broadcast content" can include, for example, the genre, title, cast, voice actors and actresses, producer, director, original writer, and name of creator, etc. of the broadcast content. The genre can include, for example, documentary, news, variety, drama, and animation. In addition, the details of the "broadcast content" can include, for example, character strings describing the details of the broadcast content. In addition, the "viewing history" can include, for example, keywords entered by the user for searching for the broadcast content and/or the user evaluation on the broadcast content.

In the present embodiment, the viewing history of the broadcast content viewed by the user is stored in storage 15 when the user views the broadcast content in real time on TV receiver 3 or when the user makes an input for timer recording to recording device 2. Accordingly, in the present embodiment, obtainer 11 obtains the viewing history by reading the viewing history from storage 15.

Evaluator 13 assigns, based on the viewing history obtained by obtainer 11, a first score and a second score indicating the user preferences for the broadcast content to each item of the broadcast content included in the viewing history and viewed by the user in the past predetermined period. In other words, evaluator 13 includes the functions of both a first evaluator and a second evaluator, and is an example of the first evaluator as well as an example of the second evaluator.

The first score includes evaluation values related to preference tags assigned to each item of broadcast content among a plurality of preference tags of different kinds corresponding to a plurality of preferences of different kinds of the viewer. The first score is a set of numerical values assigned to respective preference tags for each item of broadcast content. Accordingly, when ten kinds of preference tags are set in information processing device 100, a first score including ten numerical values is assigned to one item of broadcast content by evaluator 13.

The second score includes evaluation values related to combined preference tags and single preference tags for broadcast content among a plurality of combined preference tags of different patterns and a plurality of single preference tags of different patterns. Each of the combined preference tags is a combination of two or more preference tags. Each of the single preference tags is one kind of preference tag solely assigned to the broadcast content. When each combined preference tag is set by, for example, a combination of two kinds of preference tags, and when there are ten kinds of preference tags, combination patterns of 10 × 9/2 × 1 = 45 are obtained. Similarly, when each combined preference tag is set by, for example, a combination of three kinds of preference tags, and when there are ten kinds of preference tags, combination patterns of 10 × 9 × 8/(3 × 2 × 1) = 120 are obtained.

In addition, ten patterns of single preference tags are obtained, for example, each including a different one of ten kinds of preference tags. A single preference tag is information that differs from a combined preference tag in that only a given preference tag is included and no other preference tags are included. In other words, broadcast content with the preference tag of tag A assigned may include several combined preference tags including tag A, such as tag A and tag B, tag A and tag C, .... The broadcast content with a single preference tag corresponding to the preference tag of tag A does not include any other preference tags (i.e., does not include any combined preference tags).

The second score is a set of numerical values assigned to respective combined preference tags and single preference tags for each item of broadcast content. Accordingly, in information processing device 100, when ten kinds of preference tags are set and each combined preference tag includes a combination of two kinds of preference tags, evaluator 13 assigns, to one item of broadcast content, a second score including 45 + 10 = 55 patterns, i.e., 55 numerical values.

In such a manner, evaluator 13 assigns a first score based on the preference tags assigned to the broadcast content, and also assigns a second score that indicates further details based on whether or not the broadcast content includes combined preference tags and single preference tags. The assignment of the first and second scores by evaluator 13 will be described below, along with a description of an operation of information processing device 100.

A plurality of preference tags of different kinds may be set as appropriate for estimating user preferences using information processing device 100. Here, preference tags are described as information corresponding to the above mentioned broadcast content genres (including documentary, news, variety, drama, animation, etc.).

Storage 15 is a storage device in which information (computer programs, etc.) necessary for each unit of information processing system 100 to perform various functions is stored. Storage 15 is realized, for example, by a semiconductor memory. However, storage 15 is not particularly limited to such an example, and any known unit of electronic information storage can be used for storage 15. Storage 15 stores, for example, viewing history. In the present embodiment, storage 15 stores (accumulates) the first score and the second score of each item of broadcast content evaluated by evaluator 13. More specifically, storage 15 includes a first preference information table that stores the first scores and a second preference information table that stores the second scores. The first preference information table and the second preference information table stored in storage 15 as described above include information about the preference tags of the broadcast content viewed by the user in a predetermined period, as well as the combined preference tags and the single preference tags. Accordingly, by referring to the first preference information table and the second preference information table, it is possible to recognize user preferences for the broadcast content in the predetermined period.

Here, as described above, the first preference information table includes the first scores related to the preference tags only for the broadcast content viewed in a predetermined period. On the other hand, as described above, the second preference information table includes the second scores related to the combined preference tags and the single preference tags only for the broadcast content viewed in the predetermined period. In other words, by referring to the first preference information table and the second preference information table, it is possible not only to estimate user preferences based on the preference tags alone, but also to estimate user preferences based on the combined preference tags and the single preference tags. Compared to the preference tags, the combined preference tags and the single preference tags indicate user preferences in such a detailed manner that two or more kinds of preference tags are combined or there are no preference tags to be combined. Accordingly, there is an advantage that estimating user preferences in the above manner is more likely to match the actual user preferences than simply estimating user preferences based on the preference tags alone. However, due to their nature, combined preference tags and single preference tags are difficult to identify significant trends unless there are a sufficiently large number of samples (in this case, a sufficiently large number of items of broadcast content included in the viewing history).

In view of the above, in the present embodiment, while estimating the mainstream of user preferences by using simple information about preference tags together, the combined preference tags and the single preference tags are further used for more detailed estimation, so that the estimated result approaches the actual user preferences. This makes it possible to estimate user preferences that match the actual user preferences even with a relatively small number of samples.

Description is given referring to FIG. 1 again. Outputter 17 refers to the first preference information table and the second preference information table to output preference information that matches user preferences in the predetermined period. The preference information includes one or more preference tags among (i) a plurality of kinds of preference tags, (ii) a plurality of patterns of combined preference tags, and (iii) a plurality of patterns of single preference tags. Outputter 17 is a processor realized by a processor, a memory, and a program stored in the memory. Outputter 17 outputs the preference information to matching device 300 and the like to be described later.

Tag assignment device 150 is a device that assigns preference tags to broadcast content. In the present embodiment, an example will be described in which tag assignment device 150 assigns preference tags to be used in the processing of information processing device 100. However, the preference tags may be assigned by an external entity (e.g., a broadcast content distribution provider). Tag assignment device 150 is a processor realized by a processor, a memory, and a program stored in the memory. Tag assignment device 150 includes AI models trained by learning for each kind of preset preference tag. For example, when twenty kinds of preference tags are set, tag assignment device 150 includes twenty AI models corresponding to the twenty kinds of preference tags. Tag assignment device 150 receives input of EPG information and SI information, etc., for broadcast content. Then, by inputting the received EPG information and SI information, etc. into each AI model sequentially or in parallel, tag assignment device 150 outputs information about whether or not one preference tag set to each AI model is to be assigned to the broadcast content with the EPG information, SI information, and the like assigned. Tag assignment device 150 assigns a preference tag to be assigned to the broadcast content based on the result output from the AI model. Subsequently, evaluator 13 obtains information about the broadcast content after the assignment of the preference tag output from tag assignment device 150.

Content storage device 200 is a device for storing broadcast content, and is realized by semiconductor memory, etc. Content storage device 200 records and stores, for example, all broadcast content simultaneously broadcast by terrestrial broadcasting. The user is able to select and view any broadcast content from among the broadcast content stored in content storage device 200.

Matching device 300 is a device that uses the user preference information output from information processing device 100 to select broadcast content that matches user preferences from among the broadcast content stored in content storage device 200. Matching device 300 is a processor realized by a processor, a memory, and a program stored in the memory. For example, matching device 300 inputs broadcast content stored in content storage device 200 to tag assignment device 150 for assignment of preference tags. Based on the user preference information output from outputter 17, matching device 300 calculates the degree of matching between the preference tags (as well as combined preference tags and single preference tags) assigned to the broadcast content and the preference tags (as well as combined preference tags and single preference tags) in the preference information. Matching device 300, for example, selects the broadcast content with a highest matching degree calculated, or selects the broadcast content with a matching degree calculated that is higher than a threshold value.

Now, description is given to information processing device 100 again. Evaluation level calculator 19 refers to the first score stored in the first preference information table and the second score stored in the second preference information table in storage 15 to calculate the evaluation level for the broadcast content selected from content storage device 200 by matching device 300 based on the preference tags (as well as the combined preference tags and the single preference tags) in the preference information. Here, the evaluation level is, for example, obtained by calculating the sum of the matching degree for the first score and the matching degree for the second score for each of 50 items of broadcast content (e.g., the top 50 in order of the highest matching degree with the user preference information) to be presented by the information processing system as recommendations to the user, and determining the ratio of the calculated sum to a given score total as an approximate value. This approximate value indicates, to the user, the degree of matching of the broadcast content calculated by information processing system 100. Accordingly, the user is able to recognize the degree of matching of the broadcast content with his or her preferences simply by looking at the approximate value. As a result, the approximate value can be used by the user as an index for selecting broadcast content that matches his or her preferences.

The degree of matching for the first score is calculated from the total number of preference tags that match among the preference tags assigned to the broadcast content and the preference tags in the user preference information. For example, the degree of matching for the first score is calculated by multiplying the total number of matching preference tags by a predetermined coefficient. The degree of matching for the second score is calculated from the total number of combined preference tags and single preference tags that match among the combined preference tags and the single preference tags assigned to the broadcast content and the combined preference tags and the single preference tags in the user preference information. For example, the degree of matching for the second score is calculated by multiplying the total number of matching combined preference tags and single preference tags by a predetermined coefficient.

For example, assume that the total of the matching degrees for the first and second scores for the first ranked broadcast content among the broadcast content presented by the information processing system is 83 and the total score for the second ranked broadcast content is 68. In this case, when a predetermined score is set to 100 in order to make it a percentage, (after rounding to the nearest 10) the approximate values are calculated to be 80 (matching degree of 80% with user preference information) as the evaluation level of the first-ranked broadcast content and 70 (matching degree of 70% with user preference information) as the evaluation level of the second-ranked broadcast content.

Presentation device 400 reads the broadcast content selected by matching device 300 and presents the broadcast content that matches user preferences by playing the broadcast content on the display of television receiver 3, or by listing the selected broadcast content, etc. Presentation device 400 includes, for example, a controller that reads broadcast content information from content storage device 200 and a decoder that performs conversion for projection on the display.

When the broadcast content selected by matching device 300 is presented on presentation device 400, such an image below may be presented. The image includes, along with the selected broadcast content, information about the details of the broadcast content, the evaluation level calculated for the broadcast content, and tag information that matches the user preference information. The tag information includes at least one or more preference tags among (i) a plurality of kinds of preference tags assigned to the broadcast content, (ii) a plurality of patterns of combined preference tags assigned to the broadcast content, and (iii) a plurality of patterns of single preference tags assigned to the broadcast content. In this case, the image presented by presentation device 400 is generated by graphic generator 21. Graphic generator 21 collectively generates an image including the selected broadcast content, information about the details of the broadcast content, the calculated evaluation levels, and the tag information. The image allows the user to recognize the information at a glance.

FIG. 6 illustrates an example of a display screen when the image generated by graphic generator 21 is presented by presentation device 400. The information about the image indicating the details of the broadcast content and text information indicating the details of the broadcast content from content storage device 200 are presented. The EPG information and/or SI information attached to the broadcast content may be used for the text information here. In addition, the evaluation level calculated by evaluation calculator 19 as the basis for recommending the broadcast content, and the preference tags, combined preference tags, and single preference tags that match between the broadcast content and preference information as the reason that the evaluation level is high are displayed as icons. By displaying such information, the user is able to check his or her own preference information used as a basis for the broadcast content recommendation, which motivates the user to view the broadcast content.

### [2. Operation]

An operation of information processing device 100 configured as above will be described with reference to FIG. 2 to FIG. 5 below. FIG. 2 is a flowchart illustrating an example of processes performed by the information processing device according to the embodiment.

First, obtainer 11 obtains the viewing history of the user stored in storage 15 by accessing storage 15 (obtaining step S101). Next, evaluator 13 selects one item of the broadcast content among the broadcast content viewed by the user included in the obtained viewing history (step S102). The broadcast content includes preference tags assigned in advance by tag assignment device 150. Evaluator 13 then assigns a first score related to the preference tags to the one broadcast content selected (first evaluation step S103). Evaluator 13 stores the assigned first score in the first preference information table in storage 15 (first storage step S104).

Here, FIG. 3A illustrates an example of first scores stored according to the embodiment. In FIG. 3A, the first row indicates the kinds of preference tags (tag A, tag B, ...) and the first column indicates the identification numbers of the broadcast content (content 1, content 2, ...), and the corresponding cell indicates the numerical value indicating whether or not the preference tag has been assigned to the broadcast content. In the example of FIG. 3A, the first score is expressed by "1" (an example of a first value) indicating that the preference tag has been assigned, and "0" (an example of a second value) indicating that the preference tag has not been assigned. For example, the preference tag of tag A has been assigned to content 1 and the preference tags of tag B, tag C and tag D have not been assigned to content 1.

In such a manner, the first score includes information about whether or not each preference tag has been assigned for each broadcast content. With respect to this user, the number of preference tags of tags A and B assigned is relatively large. Hence, in terms of preference tags, it can be said that the user tends to prefer broadcast content with tag A and tag B assigned.

In contrast, FIG. 4A illustrates another example of the first scores stored according to the embodiment. FIG. 4A is similar to FIG. 3A, but differs from the example in FIG. 3A in that the numerical values of the first score are not binary values of "0" and "1". As illustrated in FIG. 4A, the first score may be expressed by multilevel evaluation values including three or more numerical values. In other words, the first score is expressed by "1" (an example of the first value), indicating that the preference tag has been assigned, a numerical value between "1" and "0.1" (an example of a third value), corresponding to the relevance between the broadcast content and the preference tag, and "0" (an example of the second value), indicating that the preference tag has not been assigned.

The third value is not limited to the above "0.1", but may be a number as far away from the first value as possible and as close to the second value as possible, such as "0.01" or "0.001". The numerical value of the first score matching any of the third values above means that the preference tag has been assigned. However, a value close to the first value or close to the third value, etc., is assigned based on the relevance between the broadcast content and the preference tag (e.g., the frequency of occurrence of a specific word, or the relationship of a specific word itself with the preference tag). In order to assign such a multilevel first score, the preference tag assigned by tag assignment device 150 may include information about the relevance.

Description is given referring to FIG. 2 again. Evaluator 13 assigns a second score related to combined preference tags and single preference tags to the one item of broadcast content selected (second evaluation step S105). Evaluator 13 stores the assigned second score in the second preference information table in storage 15 (second storage step S106).

Here, FIG. 3B illustrates an example of second scores stored according to the embodiment. In FIG. 3B, the first row indicates patterns of the combined preference tag (A&B, A&C, ...) and patterns of the single preference tag (A only, B only, ...), the first column indicates the identification numbers of the broadcast content (content 1, content 2, ...), and the corresponding cell indicates the numerical value indicating whether or not the broadcast content includes the combined preference tag or the single preference tag. In the example in FIG. 3B, the second score is expressed by "1" (an example of the first value), indicating that the broadcast content includes the combined preference tag or the single preference tag, and "0" (an example of the second value) indicating that the broadcast content does not include the combined preference tag and the single preference tag. For example, content 2 includes a combined preference tag of A & B (combination of tag A and tag B) and does not include combined preference tags of A & C, A & D and B & C. In addition, content 2 does not include single preference tags of A only and B only.

In such a manner, for one item of broadcast content, when each of the numerical values of the first score assigned to two preference tags in one pattern of combined preference tag among a plurality of patterns of combined preference tags is "1", evaluator 13 assigns "1" as the second score to the combined preference tag. Here, evaluator 13 assigns "0" as the second score to each of single preference tags among a plurality of patterns of single preference tags. Each of the single preference tags is one of the two or more preference tags in the one pattern of combined preference tag assigned solely to the one item of broadcast content.

In contrast, for example, content 1 includes the single preference tag of A only (does not include any other preference tags other than tag A only). In addition, content 1 does not include combined preference tags of A & B, A & C, and A & D.

In such a manner, when at least one of the numerical values of the first score of the two or more preference tags in the combined preference tag assigned to one item of broadcast content is "0", evaluator 13 assigns "0" as the second score to the combined preference tag, and assigns a numerical value as the second score to each of single preference tags among a plurality of patterns of single preference tags. Each of the single preference tags is one of the two or more preference tags in the one pattern of combined preference tag solely assigned to the one item of broadcast content. The numerical value is a value assigned as the first score to a corresponding preference tag.

In contrast, FIG. 4B illustrates another example of the second scores stored according to the embodiment. FIG. 4B is similar to FIG. 3B, but differs from the example in FIG. 3B in that each of the numerical values of the second score is not a binary value of "0" and "1". As illustrated in FIG. 4B, each second score may be a multilevel evaluation value including three or more numerical values. In other words, the second score is expressed by "1" (an example of the first value) indicating that the combined preference tag or the single preference tag has been assigned, a numerical value between "1" and "0.1" (an example of a third value) corresponding to the relevance between the broadcast content and the combined preference tag or the single preference tag, and "0" (an example of the second value) indicating that the combined preference tag and the single preference tag have not been assigned.

In particular, in the example of FIG. 4B, for one item of broadcast content, when each of numerical values of the first score assigned to two or more preference tags in one pattern of combined preference tag among the plurality of patterns of combined preference tags is not the second value, evaluator 13 assigns, as the second score, a smallest numerical value among the numerical values of the first score to the one pattern of combined preference tag, and assigns the second value as the second score to each of single preference tags among the plurality of patterns of single preference tags. Each of the single preference tags is one of the two or more preference tags in the one pattern of combined preference tag solely assigned to the one item of broadcast content.

In the example in FIG. 4B, when at least one of the numerical values of the first score of the two or more preference tags in the one pattern of combined preference tag assigned to the one item of broadcast content is the second value, evaluator 13 assigns the second value as the second score to the one pattern of combined preference tag, and assigns a numerical value as the second score to each of the single preference tags. The numerical value is a value assigned as the first score to a corresponding preference tag.

Description is given referring to FIG. 2 again. Evaluator 13 determines whether all items of broadcast content in the viewing history has been selected (step S107). When evaluator 13 determines that all items of broadcast content has not been selected (No in step S107), evaluator 13 returns to step S102, selects another item of broadcast content, and repeats first evaluation step S103 to second storage step S106. When evaluator 13 determines that all items of broadcast content has been selected (Yes in step S107), evaluator 13 ends the processing. Outputter 17 then refers to the first preference information table and the second preference information table to output preference information that matches user preferences in a predetermined period. The preference information includes one or more preference tags among a plurality of preference tags, a plurality of patterns of combined preference tags, and a plurality of patterns of single preference tags (output step S108).

FIG. 5 is a flowchart illustrating an example of a process for outputting preference information and presenting broadcast content according to the embodiment. FIG. 5 illustrates the process of outputting preference information performed by outputter 17 and the process of presenting broadcast content.

First, the outputter calculates the sum of the first scores (step S201). Calculating the sum of the first scores is the process of calculating the sum of the first scores for each preference tag for all items of broadcast content in a predetermined period. Accordingly, for the predetermined period, the number of the sums calculated corresponds to the number of kinds of preference tags set in advance. Outputter 17 then selects the preference tag with the largest sum (step S202).

Outputter 17 also calculates the sum of the second scores of the broadcast content viewed within a predetermined period (step S203). Calculating the sum of the second scores is the process of calculating the sum of the second scores for each combined preference tag and each single preference tag for all items of broadcast content in the predetermined period. Accordingly, for the predetermined period, the number of sums calculated corresponds to the number of patterns of combined preference tags and the number of patterns of single preference tags set in advance. Outputter 17 then selects the combined preference tag or the single preference tag with the largest sum (step S204).

Outputter 17 determines whether the selected tag in step S204 is the single preference tag among the combined preference tag and the single preference tag (step S205). When outputter 17 determines that the single preference tag was not selected (in other words, the combined preference tag was selected) (No in step S205), outputter 17 further determines whether the preference tag corresponds to the combined preference tag (step S206). Here, outputter 17 determines whether the preference tag selected in step S202 is included in the preference tags in the combined preference tag selected in step S204.

When outputter 17 determines that the preference tag does not correspond to the combined preference tag (No in step S206), outputter 17 outputs preference information including the selected preference tag and the selected combined preference tag (step S207). On the other hand, when outputter 17 determines that the preference tag corresponds to the combined preference tag (Yes in step S206), outputter 17 outputs preference information including the selected combined preference tag (step S208).

On the other hand, when outputter 17 determines that the single preference tag was selected (Yes in step S205), outputter 17 further determines whether the preference tag corresponds to the single preference tag (step S209). Here, outputter 17 determines whether the preference tag corresponding to the single preference tag selected in step S204 matches the preference tag selected in step S202.

When outputter 17 determines that the preference tag does not correspond to the single preference tag (No in step S209), outputter 17 outputs preference information including the selected preference tag and the selected single preference tag (step S210). On the other hand, when outputter 17 determines that the preference tag corresponds to the single preference tag (Yes in step S209), outputter 17 outputs preference information including the selected combined preference tag (step S211).

Presentation device 400 then presents the broadcast content based on the output preference information (step S212). Specifically, when a preference tag is included in the output preference information, matching device 300 first selects the broadcast content with the preference tag assigned from among the broadcast content stored in content storage device 200. Matching device 300 then further selects the broadcast content with the combined preference tag or single preference tag, from among the selected broadcast content, and outputs the selection information related to the selection to presentation device 400. Based on the selection information, presentation device 400 reads the broadcast content from content storage device 200, performs decoding and the like on the read broadcast content, and displays the broadcast content on the display of television receiver 3 or the like. Moreover, when the output preference information does not include any preference tags, matching device 300 selects the broadcast content with a combined preference tag or single preference tag from among the broadcast content stored in content storage device 200, and outputs selection information related to the selection to presentation device 400.

The example has been described where preference tags are preferentially used to select broadcast content over the combined preference tags and single preference tags. However, the combined preference tags and single preference tags may be preferentially used to select the broadcast content over the preference tags.

In this way, by combining the first scores related to the preference tags and the second scores related to the combined preference tags and the single preference tags, it is possible to estimate user preferences in a more detailed manner than before. Accordingly, it is possible to reflect user preferences more precisely, for example, in the selection of broadcast content.

### (Variations)

The embodiment has been described above as an example of the technique disclosed in the present application. However, the technique according to the present disclosure is not limited to the above example, and can be applied to embodiments in which changes, replacements, additions, omissions, etc. are made as appropriate. Moreover, each structural element described in the above embodiment can be combined to form a new embodiment.

Variations of the embodiment will be described below.

For example, in the above embodiment, information processing device 100 is realized as a single device, but may be realized by a plurality of devices. When information processing device 100 is realized by a plurality of devices, the structural elements included in information processing device 100 may be distributed to the devices in any manner. In other words, the present disclosure may be realized by cloud computing, or by edge computing.

For example, in the embodiment, all or part of the structural elements included in information processing device 100 according to the present disclosure may be configured by a dedicated hardware, or may be realized by executing a software program suitable for each structural element. Moreover, each structural element may be realized by a central processing unit (CPU) or a program execution unit such as a processor reading the software program recorded on a recording medium such as a hard disk drive (HDD) or semiconductor memory and executing the software program.

The structural elements included in information processing device 100 according to the present disclosure may be formed by a single electronic circuit or a plurality of electronic circuits. The single electronic circuit or each of the plurality of electronic circuits may be a general-purpose circuit or a dedicated circuit.

The single electronic circuit or the plurality of electronic circuits may include, for example, a semiconductor device, an integrated circuit (IC), or a large scale integration (LSI). The IC or LSI may be integrated into a single chip or a plurality of chips. The name used here is IC or LSI, but it may also be called system LSI, very large scale integration (VLSI), or ultra large scale integration (ULSI) depending on the degree of integration. A field programmable gate array (FPGA) that can be programmed after manufacturing an LSI can be used for the same purpose.

Moreover, the general or specific aspects of the present disclosure may be realized by a system, a device, a method, an integrated circuit, or a computer program. Alternatively, the general or specific aspects may be realized by a computer-readable non-transitory recording medium such as an optical disk, HDD, or semiconductor memory in which the computer program is stored. For example, the present disclosure may be realized as a program for causing a computer to execute the control method according to the embodiment. The program may be recorded in a non-transitory recording medium such as a computer-readable CD-ROM, or be distributed via a communication path such as the Internet.

The embodiment has been described above and exemplified as the technique of the present disclosure. Appended drawings and detailed descriptions have been provided for that purpose.

Accordingly, the structural elements described in the appended drawings and the detailed descriptions can include not only essential structural elements for exemplifying the above described technique, but also structural elements that are not essential. Therefore, it should not be immediately construed that these structural elements that are not essential are essential even if the structural elements are described in the appended drawings and the detailed descriptions.

Since the above described embodiment is for exemplifying the technique of the present disclosure, various modifications, replacements, additions, omissions, and the like can be made within the scope of the appended claims or of their equivalents.

### (Conclusion)

As described above, information processing device 100 according to a first aspect of the embodiment includes: obtainer 11 that obtains a viewing history of one or more items of broadcast content viewed by a user in a past predetermined period; a first evaluator (one of the functions of evaluator 13) that assigns a first score related to a preference tag assigned to each of a plurality of items of broadcast content among a plurality of preference tags of different kinds corresponding to a plurality of preferences of different kinds of a viewer; a second evaluator (one of the functions of evaluator 13) that assigns a second score related to a combined preference tag or a single preference tag corresponding to each of the plurality of items of broadcast content among a plurality of combined preference tags of different patterns and a plurality of single preference tags of different patterns, each of the plurality of combined preference tags being a combination of two or more of the plurality of preference tags, each of the plurality of single preference tags being one of the plurality of preference tags solely assigned to the broadcast content; a first preference information table that stores the first score calculated for each of the one or more items of broadcast content included in the viewing history obtained; a second preference information table that stores the second score calculated for each of the one or more items of broadcast content included in the viewing history obtained; and outputter 17 that refers to the first preference information table and the second preference information table to output preference information that matches a preference of the user in the past predetermined period, the preference information including one or more preference tags among (i) the plurality of preference tags, (ii) the plurality of combined preference tags, and (iii) the plurality of single preference tags.

By combining the first score for preference tags and the second score for combined preference tags and single preference tags, information processing device 100 is capable of estimating user preferences in a more detailed manner than before. Accordingly, it is possible to reflect user preferences, for example, in the selection of broadcast content with higher precision.

Moreover, for example, information processing device 100 according to a second aspect of the embodiment is information processing device 100 according to the first aspect in which, for one item of broadcast content, the first evaluator (evaluator 13) assigns a first value as the first score to a preference tag assigned to the one item of broadcast content among the plurality of preference tags, and the first evaluator assigns a second value different from the first value as the first score to a preference tag that is not assigned to the one item of broadcast content among the plurality of preference tags.

With this, the preference tags assigned to one item of broadcast content can be quantified according to which of the first value or the second value is assigned, and user preference information can be generated in view of the presence or absence of the preference tags.

Moreover, for example, information processing device 100 according to a third aspect of the embodiment is information processing device 100 according to the second aspect in which, for the one item of broadcast content, when each of numerical values of the first score assigned to two or more preference tags in one pattern of combined preference tag among the plurality of combined preference tags is the first value, the second evaluator (evaluator 13) assigns the first value as the second score to the one pattern of combined preference tag, and assigns the second value as the second score to each of single preference tags among the plurality of single preference tags, each of the single preference tags being one of the two or more preference tags in the one pattern of combined preference tag solely assigned to the one item of broadcast content, and when at least one of the numerical values of the first score of the two or more preference tags in the one pattern of combined preference tag assigned to the one item of broadcast content is the second value, the second evaluator (evaluator 13) assigns the second value as the second score to the one pattern of combined preference tag, and assigns a numerical value as the second score to each of the single preference tags, the numerical value being a numerical value assigned as the first score to a corresponding preference tag.

With this, the combined preference tags and single preference tags assigned to one item of broadcast content can be quantified according to which of the first value or the second value is assigned, and the quantified information can be used for generating user preference information.

Moreover, for example, information processing device 100 according to a fourth aspect of the embodiment is information processing device 100 according to the first aspect in which, for one item of broadcast content, the first evaluator (evaluator 13) assigns, as the first score, a numerical value between a first value and a third value to a preference tag assigned to the one item of broadcast content among the plurality of preference tags, the third value being different from the first value, the numerical value corresponding to a relevance between the one item of broadcast content and the preference tag, and the first evaluator (evaluator 13) assigns a second value as the first score to a preference tag that is not assigned to the one item of broadcast content among the plurality of preference tags, the second value being a numerical value that is not between the first value and the third value.

With this, the preference tags assigned to one item of broadcast content can be quantified according to which one of the first value, the third value, or the second value is assigned, and how much the preference tags are related to the broadcast content can be included in the numerical values. In addition, it is possible to generate user preference information in view of the presence or absence of the preference tags and the relevance between the preference tags and the broadcast content.

Moreover, for example, information processing device 100 according to a fifth aspect of the embodiment is information processing device 100 according to the fourth aspect in which, for the one item of broadcast content, when each of numerical values of the first score assigned to two or more preference tags in one pattern of combined preference tag among the plurality of combined preference tags is not the second value, the second evaluator (evaluator 13) assigns, as the second score, a smallest numerical value among the numerical values of the first score to the one pattern of combined preference tag, and assigns the second value as the second score to each of single preference tags among the plurality of single preference tags, each of the single preference tags being one of the two or more preference tags in the one pattern of combined preference tag solely assigned to the one item of broadcast content, and when at least one of the numerical values of the first score of the two or more preference tags in the one pattern of combined preference tag assigned to the one item of broadcast content is the second value, the second evaluator (evaluator 13) assigns the second value as the second score to the one pattern of combined preference tag, and assigns a numerical value as the second score to each of the single preference tags, the numerical value being a numerical value assigned as the first score to a corresponding preference tag.

With this, the combined preference tags or the single preference tags assigned to one item of broadcast content can be quantified according to which one of the first value, the third value, or the second value is assigned, and how much the combined preference tags or single preference tags are related to the broadcast content can be included in the numerical values. In addition, it is possible to generate user preference information in view of the presence or absence of the combined preference tags or the single preference tags and the relevance between the combined preference tags or the single preference tags and the broadcast content.

Moreover, for example, information processing device 100 according to a sixth aspect of the embodiment is information processing device 100 according to any one of the first aspect to the fifth aspect in which outputter 17: calculates, for each of the plurality of preference tags stored in the first preference information table, a sum of the first scores of the one or more items of broadcast content included in the viewing history obtained; calculates, for each of the plurality of combined preference tags and the plurality of single preference tags stored in the second preference information table, a sum of the second scores of the one or more items of broadcast content included in the viewing history obtained; and outputs, based on the sum of the first scores calculated and the sum of the second scores calculated, the preference information including one or more preference tags among (i) the plurality of preference tags, (ii) the plurality of combined preference tags, and (iii) the plurality of single preference tags.

With this, it is possible to generate and output user preference information based on the scores that consider the preference tags assigned to all items of broadcast content included in the viewing history, as well as the combined preference tags and single preference tags.

Moreover, an information processing method according to a seventh aspect of the embodiment includes: obtaining a viewing history of one or more items of broadcast content viewed by a user in a past predetermined period; assigning (S103) a first score related to a preference tag assigned to each of a plurality of items of broadcast content among a plurality of preference tags of different kinds corresponding to a plurality of preferences of different kinds of a viewer; assigning (S105) a second score related to a combined preference tag or a single preference tag corresponding to each of the plurality of items of broadcast content among a plurality of combined preference tags of different patterns and a plurality of single preference tags of different patterns, each of the plurality of combined preference tags being a combination of two or more of the plurality of preference tags, each of the plurality of single preference tags being one of the plurality of preference tags solely assigned to the broadcast content; storing (S104) the first score calculated for each of the one or more items of broadcast content included in the viewing history obtained; storing (S106) the second score calculated for each of the one or more items of broadcast content included in the viewing history obtained; and referring to the first score stored in S104 and the second score stored in S106 to output (S108) preference information that matches a preference of the user in the past predetermined period, the preference information including one or more preference tags among (i) the plurality of preference tags, (ii) the plurality of combined preference tags, and (iii) the plurality of single preference tags.

With this, the same advantageous effects as those of information processing device 100 described above can be achieved.

Moreover, a program according to an eight aspect of the embodiment causes one or more processors to execute the information processing method according to the seventh aspect.

With this, the same advantageous effects as those of information processing device 100 described above can be achieved by causing one or more processors to execute the information processing method described above.

Moreover, an information processing system according to a ninth aspect of the embodiment includes: information processing device 100 according to any one of the first to sixth aspects described above; matching device 300 that selects one or more items of broadcast content to be presented to the user, based on the preference information outputted; evaluation level calculator 19 that calculates an evaluation level that is based on each of the one or more items of broadcast content selected and the preference information; and graphic generator 21 that generates an image including, along with the one or more items of broadcast content selected, information about details of each of the one or more items of broadcast content, the evaluation level calculated for the broadcast content, and tag information that matches the preference information of the user, the tag information including one or more tags among (i) the plurality of preference tags, (ii) the plurality of combined preference tags, and (iii) the plurality of single preference tags.

Such an information processing system is capable of presenting broadcast content that matches the preference information output by information processing device 100. In this case, the information processing system is capable of generating and presenting an image. The image includes, along with the broadcast content, information about the details of the broadcast content, the evaluation levels calculated for the broadcast content, and tag information that matches with user preference information. The tag information includes at least one or more tags among (i) a plurality of kinds of preference tags, (ii) a plurality of patterns of combined preference tags, and (iii) a plurality of patterns of single preference tags assigned to the broadcast information. In other words, the user is capable of recognizing, at a glance, the information, i.e., how the broadcast content being presented was selected.

### [Industrial Applicability]

The present disclosure is applicable to, for example, a system for estimating user preferences based on the viewing history of broadcast content viewed by a user.

### [Reference Signs List]

- 2: recording device
- 3: television receiver
- 11: obtainer
- 13: evaluator
- 15: storage
- 17: outputter
- 19: evaluation level calculator
- 21: graphic generator
- 100: information processing device
- 150: tag assignment device
- 200: content storage device
- 300: matching device
- 400: presentation device

## Claims

1. An information processing device comprising:
an obtainer that obtains a viewing history of one or more items of broadcast content viewed by a user in a past predetermined period;
a first evaluator that assigns a first score related to a preference tag assigned to each of a plurality of items of broadcast content among a plurality of preference tags of different kinds corresponding to a plurality of preferences of different kinds of a viewer;
a second evaluator that assigns a second score related to a combined preference tag or a single preference tag corresponding to each of the plurality of items of broadcast content among a plurality of combined preference tags of different patterns and a plurality of single preference tags of different patterns, each of the plurality of combined preference tags being a combination of two or more of the plurality of preference tags, each of the plurality of single preference tags being one of the plurality of preference tags solely assigned to the broadcast content;
a first preference information table that stores the first score calculated for each of the one or more items of broadcast content included in the viewing history obtained;
a second preference information table that stores the second score calculated for each of the one or more items of broadcast content included in the viewing history obtained; and
an outputter that refers to the first preference information table and the second preference information table to output preference information that matches a preference of the user in the past predetermined period, the preference information including one or more preference tags among (i) the plurality of preference tags, (ii) the plurality of combined preference tags, and (iii) the plurality of single preference tags.

2. The information processing device according to claim 1,
wherein, for one item of broadcast content,
the first evaluator assigns a first value as the first score to a preference tag assigned to the one item of broadcast content among the plurality of preference tags, and
the first evaluator assigns a second value different from the first value as the first score to a preference tag that is not assigned to the one item of broadcast content among the plurality of preference tags.

3. The information processing device according to claim 2,
wherein, for the one item of broadcast content,
when each of numerical values of the first score assigned to two or more preference tags in one pattern of combined preference tag among the plurality of combined preference tags is the first value, the second evaluator assigns the first value as the second score to the one pattern of combined preference tag, and assigns the second value as the second score to each of single preference tags among the plurality of single preference tags, each of the single preference tags being one of the two or more preference tags in the one pattern of combined preference tag solely assigned to the one item of broadcast content, and
when at least one of the numerical values of the first score of the two or more preference tags in the one pattern of combined preference tag assigned to the one item of broadcast content is the second value, the second evaluator assigns the second value as the second score to the one pattern of combined preference tag, and assigns a numerical value as the second score to each of the single preference tags, the numerical value being a numerical value assigned as the first score to a corresponding preference tag.

4. The information processing device according to claim 1,
wherein, for one item of broadcast content,
the first evaluator assigns, as the first score, a numerical value between a first value and a third value to a preference tag assigned to the one item of broadcast content among the plurality of preference tags, the third value being different from the first value, the numerical value corresponding to a relevance between the one item of broadcast content and the preference tag, and
the first evaluator assigns a second value as the first score to a preference tag that is not assigned to the one item of broadcast content among the plurality of preference tags, the second value being a numerical value that is not between the first value and the third value.

5. The information processing device according to claim 4,
wherein, for the one item of broadcast content,
when each of numerical values of the first score assigned to two or more preference tags in one pattern of combined preference tag among the plurality of combined preference tags is not the second value, the second evaluator assigns, as the second score, a smallest numerical value among the numerical values of the first score to the one pattern of combined preference tag, and assigns the second value as the second score to each of single preference tags among the plurality of single preference tags, each of the single preference tags being one of the two or more preference tags in the one pattern of combined preference tag solely assigned to the one item of broadcast content, and
when at least one of the numerical values of the first score of the two or more preference tags in the one pattern of combined preference tag assigned to the one item of broadcast content is the second value, the second evaluator assigns the second value as the second score to the one pattern of combined preference tag, and assigns a numerical value as the second score to each of the single preference tags, the numerical value being a numerical value assigned as the first score to a corresponding preference tag.

6. The information processing device according to claim 1,
wherein the outputter:
calculates, for each of the plurality of preference tags stored in the first preference information table, a sum of the first scores of the one or more items of broadcast content included in the viewing history obtained;
calculates, for each of the plurality of combined preference tags and the plurality of single preference tags stored in the second preference information table, a sum of the second scores of the one or more items of broadcast content included in the viewing history obtained; and
outputs, based on the sum of the first scores calculated and the sum of the second scores calculated, the preference information including one or more preference tags among (i) the plurality of preference tags, (ii) the plurality of combined preference tags, and (iii) the plurality of single preference tags.

7. An information processing method comprising:
obtaining a viewing history of one or more items of broadcast content viewed by a user in a past predetermined period;
assigning a first score related to a preference tag assigned to each of a plurality of items of broadcast content among a plurality of preference tags of different kinds corresponding to a plurality of preferences of different kinds of a viewer;
assigning a second score related to a combined preference tag or a single preference tag corresponding to each of the plurality of items of broadcast content among a plurality of combined preference tags of different patterns and a plurality of single preference tags of different patterns, each of the plurality of combined preference tags being a combination of two or more of the plurality of preference tags, each of the plurality of single preference tags being one of the plurality of preference tags solely assigned to the broadcast content;
storing the first score calculated for each of the one or more items of broadcast content included in the viewing history obtained;
storing the second score calculated for each of the one or more items of broadcast content included in the viewing history obtained; and
referring to the first score stored in the storing of the first score and the second score stored in the storing of the second score to output preference information that matches a preference of the user in the past predetermined period, the preference information including one or more preference tags among (i) the plurality of preference tags, (ii) the plurality of combined preference tags, and (iii) the plurality of single preference tags.

8. A program for causing one or more processors to execute the information processing method according to claim 7.

9. An information processing system comprising:
the information processing device according to any one of claims 1 to 6;
a matching device that selects one or more items of broadcast content to be presented to the user, based on the preference information outputted;
an evaluation level calculator that calculates an evaluation level that is based on each of the one or more items of broadcast content selected and the preference information; and
a graphic generator that generates an image including, along with the one or more items of broadcast content selected, information about details of each of the one or more items of broadcast content, the evaluation level calculated for the broadcast content, and tag information that matches the preference information of the user, the tag information including one or more tags among (i) the plurality of preference tags, (ii) the plurality of combined preference tags, and (iii) the plurality of single preference tags.
